# EUROPÄISCHE PATENTSCHRIFT

(11) **EP 2 522 595 B1**
(45) Veröffentlichungstag und Bekanntmachung des Hinweises auf die Patenterteilung: **22.01.2014**
(21) Anmeldenummer: 11165914.0
(22) Anmeldetag: 12.05.2011
(51) Int. Cl.: B65D 75/58, B29C 59/00

(54) **Mehrschichtige Folie für Aufreißverpackungen**
Multi-layer film for peel-open packaging
Feuille multicouche pour emballages déchirables

(43) Veröffentlichungstag der Anmeldung: 14.11.2012
(73) Patentinhaber: Mondi Halle GmbH, 33790 Halle (DE)
(72) Erfinder: Maseiker, Darius, 49356 Diepholz (DE); Brauer, Jochen, 49393 Lohne (DE)
(74) Vertreter: Albrecht, Rainer Harald

(56) Entgegenhaltungen:
- EP-A1- 1 849 579
- EP-B1- 1 094 013
- DE-A1- 10 041 020
- DE-A1-102007 021 045
- US-A- 5 234 123
- US-B1- 6 427 420

## Beschreibung

Die Erfindung betrifft eine mehrschichtige Folie für Aufreißverpackungen. Die Folie weist eine Siegelschicht aus einem heißsiegelbaren Polymer an der Verpackungsinnenseite und eine die Verpackungsaußenseite bildende Deckschicht aus einem mittels Laserstrahlen schneidbaren Polymer auf und ist mit mindestens einer Laserkerbe versehen. "Laserkerbe" meint im Rahmen der Erfindung einen durch Laserstrahlen erzeugten linienförmigen Materialabtrag, der als Schwächungslinie zum Aufreißen der Folie bzw. einer daraus geformten Verpackung geeignet ist. Die Laserkerbe kann einen geraden oder bogenförmig gekrümmten Verlauf aufweisen.

Eine mehrschichtige Folie für Aufreißverpackungen mit den zuvor beschriebenen Merkmalen ist aus EP 1 849 579 A bekannt. Die Laserkerbe ist einem Folienabschnitt angeordnet, der durch Heißprägen vorbehandelt wurde. Eine durch Heißprägen gebildete linienförmige Prägung sowie die durch Laserstrahlen erzeugte Laserkerbe sind in Deckung und bilden gemeinsam eine Schwächungslinie zum Aufreißen einer aus der Folie bestehenden Verpackung.

Die DE 100 41 020 A1 betrifft eine Folie mit einer durch Laserstrahlen gebildeten Schwächungslinie. Die Schwächungslinie besteht aus einer durch Materialabtrag gebildeten Kerbe, wobei im Bereich der Schwächungslinie durchgehend Verpackungsmaterial verbleibt. Die Druckschrift macht keine Angaben zur Folie und zum Folienmaterial.

Die EP 1 094 013 B1 betrifft eine mehrschichtige Folie, wobei eine Polymerschicht der Folie entlang einer Schwächungslinie vorgestanzt ist. Die Schwächungslinie ist eine aus Stegen und Schnitten gebildete Perforationslinie. Um eine ordnungsgemäße Funktion der Schwächungslinie sicherzustellen, müssen eine Mehrzahl von Parametern genau eingehalten werden. So wird gefordert, dass die vorgestanzte Schicht außerhalb der Schwächungslinie eine Reißfestigkeit von mehr als 0,3 daN aufweist, während die nicht vorgestanzte Schicht eine Reißfestigkeit unter 0,07 daN haben muss. Außerhalb der Schwächungslinie ist eine Reißfestigkeit notwendig, die mindestens das Doppelte der Reißfestigkeit der Schwächungslinie beträgt.

Aus DE 10 2007 021 045 A1 ist schließlich eine Schutzumhüllung unter anderem für Wurstwaren bekannt, die eine Perforationslinie zum Aufreißen aufweist. Es wird hervorgehoben, dass der Abstand der Perforationslöcher sowie auch deren Größe von entscheidender Bedeutung für die Funktion der Schwächungslinie ist und der Abstand der Löcher sorgfältig ausgewählt werden muss. Im Falle eines kurzen Abstandes kann es, insbesondere bei Druckeinwirkung von außen, zu einem vorzeitigen Aufreißen entlang der Perforationslinie kommen. Ist die Beabstandung der Perforationslöcher zu groß, ist ein einfaches, sauberes Aufreißen entlang der durch die Perforationslinie vorgegebenen Richtung nicht bzw. nur unter erheblicher Zugkraft möglich.

Bei sehr zähen Verbundfolien, die beispielsweise eine Deckschicht aus Polyester und eine Siegelschicht aus Polyethylen aufweisen, ist das Aufreißen der Folie entlang einer Schwächungslinie noch nicht befriedigend gelöst. Eine als Perforationslinie ausgebildete Schwächungslinie erscheint für eine mehrschichtige, zähe Folie wenig geeignet. Die Folie dehnt sich, reißt dann unkontrolliert ein oder lässt sich gar nicht einreißen. Sofern die Stege der Perforationslinie sehr kurz gewählt werden, besteht die Gefahr, dass die Folienbahn bereits beim Umfalten und Fertigen von Verpackungen einreißt. Werden zähe Verbundfolien lediglich mit einer als Laserkerbe ausgebildeten Schwächungslinie versehen, lassen sich die Folien nur mit großer Kraftanstrengung aufreißen, so dass auch das Aufreißverhalten gelaserter Schwächungslinien unbefriedigend ist.

Vor diesem Hintergrund liegt der Erfindung die Aufgabe zugrunde, eine mehrschichtige Folie für Aufreißverpackungen anzugeben, die entlang der Schwächungslinie leicht und mit einer kontrollierten Rissausbreitung aufgerissen werden kann. Dabei soll auch die Verwendung sehr zäher Verbundfolien möglich sein.

Gegenstand der Erfindung und Lösung dieser Aufgabe ist eine mehrschichtige Folie für Aufreißverpackungen nach Anspruch 1.

Ausgehend von einer mehrschichtigen Folie mit den eingangs beschriebenen Merkmalen wird die Aufgabe erfindungsgemäß dadurch gelöst, dass eine aus Stegen und Schnitten gebildete Perforationslinie deckungsgleich entlang der Laserkerbe angeordnet ist, wobei die Schnitte der Perforationslinie die Siegelschicht zumindest partiell durchsetzen. Die Schnitte der Perforationslinie können als Längsschnitte ausgebildet sein oder auch Perforationsöffnungen begrenzen. Bevorzugt sind schmale Perforationsöffnungen und einfache Trennschnitte. Gemäß einer bevorzugten Ausführung der Erfindung erstrecken sich die Schnitte der Perforationslinie von der Außenfläche der Siegelschicht nach innen und enden an oder vor dem Grund der Laserkerbe.

Beim Einbringen der Laserkerbe in die Deckschicht der Folie mittels Laserstrahlen wird die Deckschicht im Bereich der Laserkerbe größtenteils abgetragen. Gleichzeitig tritt eine leichte Versprödung des verbleibenden Folienmaterials, insbesondere auch in der angrenzenden Siegelschicht ein. Die Versprödung der vorzugsweise polyolefinischen Siegelschicht reicht allein zwar nicht aus, um die Folie leicht aufzureißen. Überraschenderweise führt die erfindungsgemäße Kombination einer Laserkerbe und einer deckungsgleich mit dieser angeordneten Perforationslinie jedoch zu einer Schwächungslinie, die sich mit definierter Öffnungskraft gleichmäßig und mit definierter Rissausbreitung aufreißen lässt.

Die Deckschicht kann aus einem Polyester, insbesondere Polyethylenterephthalat (PET) oder Polybutylenterephthalat (PBT) bestehen. Des Weiteren kann die Deckschicht aus einem orientierten Polyamid (OPA), einem orientierten Polypropylen (OPP) oder biorientiertem Polypropylen (BOPP) hergestellt sein. Die vorgenannte Materialien weisen gute Festigkeitseigenschaften auf und sind mit einer guten Druckqualität bedruckbar. Auch die Verwendung einer polyolefinischen Deckschicht soll nicht ausgeschlossen sein. Es ist allerdings zu berücksichtigen, dass Polyolefine eine Laserstrahlung zumeist nur schwach absorbieren und der gewünschte Schneideffekt ausbleibt. Sofern Polyolefin als Deckschicht eingesetzt wird, empfiehlt sich die Verwendung eines Polyolefins, welches laserabsorptive Substanzen als Zusatz bzw. Beimischung enthält. Als laserabsorptive Substanzen sind Stoffe geeignet, welche die Strahlung in einem Wellenlängenbereich von 9,3 bis 11,5 µm absorbieren und diese in Wärmeenergie umwandeln. Dazu gehören insbesondere Mischsilikate, z. B. Kaolinit, zahlreiche anorganische Substanzen wie z. B. Glimmer, Mg-Silikate, Kieselgur, anorganische Pigmente und auch einige polymere Stoffe, wie z. B. hochmolekulares Polyethylenglycol, Polysaccharide, Polycarbonat oder Polyethylenterephthalat. Die Siegelschicht der Folie besteht vorzugsweise stets aus einem Polyethylen.

Zwischen der Deckschicht und der Siegelschicht kann eine polymere Zwischenschicht angeordnet sein, die auf ihrer der Siegelschicht zugewandten Seite metallisiert ist. Vorzugsweise besteht die Zwischenschicht aus einem metallisierten Polyester. Die Laserkerbe endet vorzugsweise innerhalb der Zwischenzeit an oder vor der metallisierten Fläche der Zwischenschicht.

Die Deckschicht der Folie kann auch eine Anordnung aus mindestens zwei nebeneinander angeordneten Laserkerben aufweisen, wobei die Perforationslinie sich deckungsgleich entlang einer ersten Laserkerbe dieser Anordnung erstreckt und wobei die Siegelschicht unterhalb einer zweiten Laserkerbe dieser Anordnung mechanisch unversehrt ist. Die Laserkerben sind mit geringem Abstand nebeneinander angeordnet. Der Abstand beträgt zweckmäßig weniger als 2 mm, wobei ein Abstand zwischen 0,5 und 1 mm bevorzugt ist. Die zweite Laserkerbe, die nicht mit Schnitten einer Perforationslinie kombiniert ist, bildet eine Abfanglinie, die den Riss leitet, wenn beim Aufreißen der Verpackung die erste Schwächungslinie verlassen wird.

Gegenstand der Erfindung ist auch ein Verfahren nach Anspruch 10 zur Herstellung der beschriebenen Folie. Gemäß dem erfindungsgemäßen Verfahren wird durch Coextrusion oder durch Verkleben von zumindest zwei Folien eine mehrschichtige Folie hergestellt, die auf einer Seite eine Deckschicht aus einem mittels Laserstrahlen schneidbaren Polymer und auf der anderen Seite eine Siegelschicht aus einem heißsiegelbaren Polymer aufweist. Mittels Laserstrahlen wird mindestens eine Laserkerbe in die Deckschicht eingebracht. In die Siegelschicht wird anschließend eine Perforation eingebracht, die eine aus Stegen und Schnitten bestehende und sich deckungsgleich entlang der Laserkerbe erstreckende Perforationslinie bildet. Durch das Einbringen einer Laserkerbe mittels Laserstrahlen, auch Laserscoring genannt, wird die Deckschicht im Bereich der Laserkerbe größtenteils abgetragen und es tritt eine leichte Versprödung der Siegelschicht ein. Beim anschließenden Perforieren der Folie in die gelaserte Linie sind dann nur das Material der Siegelschicht und Polymerreste der Deckschicht zu durchtrennen.

Die Perforation kann durch Schneiden oder Stanzen erzeugt werden und wird vorzugsweise in die Außenfläche der Siegelschicht eingebracht. Die eingebrachten Schnitte bzw. Öffnungen erstrecken sich nach innen und enden an oder vor dem Grund der Laserkerbe.

Es kann eine mehrschichtige Folie hergestellt werden, die zwischen der Deckschicht und der Siegelschicht eine polymere Zwischenschicht mit einer der Siegelschicht zugewandten metallisierten Fläche aufweist. In der Deckschicht wird mittels Laserstrahlen eine Laserkerbe erzeugt, die sich bis in die Zwischenschicht erstreckt und an oder vor der metallisierten Fläche der Zwischenschicht endet. Anschließend wird die Perforation durch Schnitte erzeugt, die in die Außenfläche der Siegelschicht eingebracht werden und sich bis zu der metallisierten Fläche der Zwischenschicht erstrecken bzw. auch die metallisierte Fläche durchsetzen.

Im Folgenden wird die Erfindung anhand einer lediglich ein Ausführungsbeispiel darstellenden Zeichnung erläutert. Es zeigen schematisch:

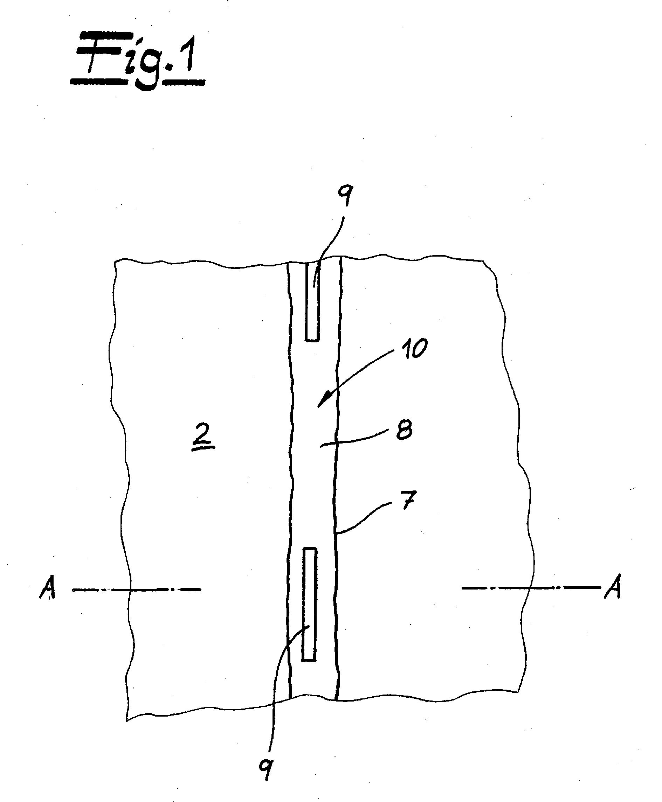

- **Fig. 1**: in einer stark vergrößerten, nicht maßstäblichen Darstellung eine Draufsicht auf eine Schwächungslinie in einer mehrschichtigen Folie für Aufreißverpackungen,

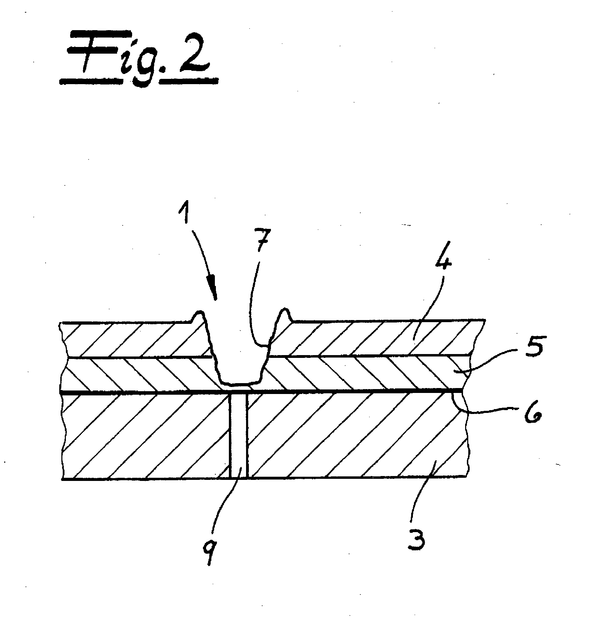

- **Fig. 2**: einen Schnitt durch die Folie im Bereich der Schwächungslinie in der Schnittebene A-A, und
- **Fig. 3**: eine Ausführungsvariante in einer der Fig. 1 entsprechenden stark vergrößerten Darstellung.

Die Figuren zeigen einen stark vergrößerten Ausschnitt einer mit einer Schwächungslinie 1 versehenen mehrschichtigen Folie 2 für Aufreißverpackungen. Die Folie 2 weist eine Siegelschicht 3 aus einem heißsiegelbaren Polymer an der Verpackungsinnenseite, eine die Verpackungsaußenseite bildende polymere Deckschicht 4 sowie eine zwischen der Deckschicht 4 und der Siegelschicht 3 angeordnete polymere Zwischenschicht 5 auf, die auf ihrer der Siegelschicht 3 zugewandten Seite metallisiert ist. Die Siegelschicht 3 besteht insbesondere aus Polyethylen. Die Deckschicht 4 an der Verpackungsaußenseite besteht aus einem mittels Laserstrahlen schneidbaren Polymer, insbesondere einem Polyester. Die Zwischenschicht besteht ebenfalls aus einem Polyester, und weist an ihrer der Siegelschicht 3 zugewandten Seite eine z. B. durch Aufdampfen erzeugte metallische Fläche 6 auf. Die mehrschichtige Folie 2 kann durch Coextrusion oder durch Verkleben der Folienlagen hergestellt werden.

Die Folie 2 weist eine in den Figuren stark vergrößerte Schwächungslinie 1 auf. Diese besteht aus einer durch Laserstrahlen erzeugten Laserkerbe 7, welche die Deckschicht 4 und zumindest teilweise auch die Zwischenschicht 5 durchtrennt. Die Laserkerbe 7 wird auch als Laserscoringlinie bezeichnet und entsteht durch Materialabtrag unter der Wirkung eines Laserstrahls. Entlang der Laserkerbe 7 und deckungsgleich zu dieser ist eine aus Stegen 8 und Schnitten 9 gebildete Perforationslinie 10 angeordnet, wobei die Schnitte 9 der Perforationslinie 10 die Siegelschicht 3 zumindest partiell durchsetzen. Die Schnitte 9 der Perforationslinie erstrecken sich von der Außenfläche der Siegelschicht 3 nach innen und enden an oder vor dem Grund der Laserkerbe.

Die Kombination der Laserkerbe 7 und der deckungsgleich angeordneten Perforationslinie 10 bildet zusammen eine Schwächungslinie 1, entlang der die Folie 2 bzw. eine aus der Folie gebildete Verpackung leicht und mit definierter Rissausbreitung gleichmäßig aufgerissen werden kann.

Bei der Herstellung der Schwächungslinie 1 wird zunächst die Laserkerbe 7 mittels Laserstrahlen in der Deckschicht 4 erzeugt. Beim Lasern werden die Deckschicht 4 sowie die Zwischenschicht 5 größtenteils abgetragen. Gleichzeitig tritt eine leichte Versprödung der aus Polyethylen bestehenden Siegelschicht 3 im Bereich der Laserkerbe 7 auf. Beim anschließenden Perforieren der Folie in die gelaserte Linie sind dann nur noch Polyesterreste im Bereich der Laserkerbe 7 zu durchtrennen. Die Versprödung der Polyethylenschicht in Kombination mit den eingebrachten Schnitten 9 der Perforationslinie 10 ergibt eine Schwächungslinie 1 mit überraschend guten Aufreißeigenschaften.

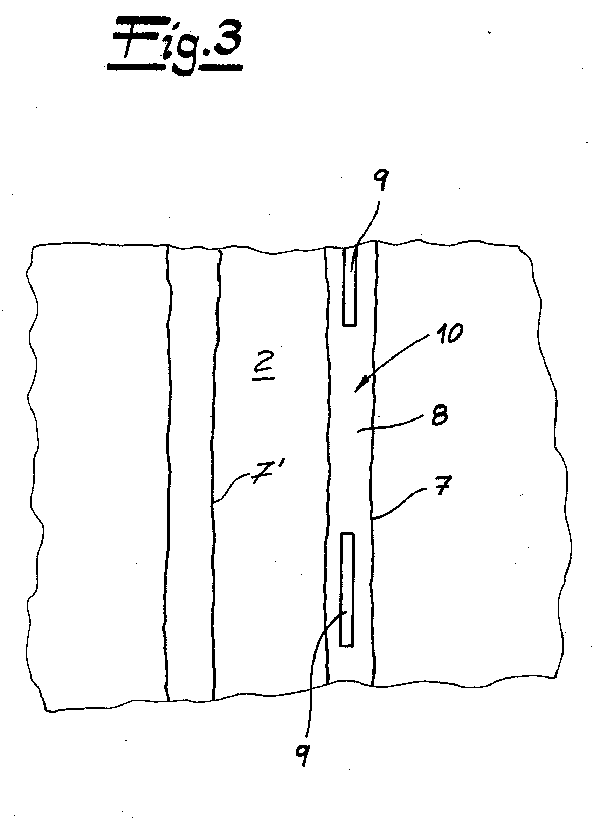

Gemäß einer in Fig. 3 dargestellten Ausführungsvariante weist die Deckschicht 4 der Folie eine Anordnung aus mindestens zwei nebeneinander angeordneten Laserkerben 7, 7' auf. Die Perforationslinie 10 erstreckt sich deckungsgleich entlang einer ersten Laserkerbe 7 dieser Anordnung. Die Siegelschicht 3 unterhalb der zweiten Laserkerbe 7' ist mechanisch unversehrt. Die Laserkerben 7, 7' der in Fig. 3 dargestellten Anordnung sind dicht nebeneinander mit einem Abstand von weniger als 2 mm angeordnet. Die Laserkerbe 7' bildet eine Abfanglinie, die den Riss leitet, wenn die aus einer Kombination der Laserkerbe 7 und einer Perforation 10 bestehende erste Schwächungslinie verlassen wird.

## Patentansprüche

1. Mehrschichtige Folie für Aufreißverpackungen, wobei die Folie (2) eine Siegelschicht (3) aus einem heißsiegelbaren Polymer an der Verpackungsinnenseite und eine die Verpackungsaußenseite bildende Deckschicht (4) aus einem mittels Laserstrahlen schneidbaren Polymer aufweist und mit mindestens einer linienförmigen Laserkerbe (7) versehen ist, welche die Deckschicht (4) zumindest teilweise durchtrennt, **dadurch gekennzeichnet, dass** eine aus Stegen (8) und Schnitten (9) gebildete Perforationslinie (10) deckungsgleich entlang der Laserkerbe (7) angeordnet ist, wobei die Schnitte (9) der Perforationslinie (10) die Siegelschicht (3) zumindest partiell durchsetzen.

2. Folie nach Anspruch 1, **dadurch gekennzeichnet, dass** die Schnitte (9) der Perforationslinie (10) sich von der Außenfläche der Siegelschicht (3) nach innen erstrecken und an oder vor dem Grund der Laserkerbe (7) enden.

3. Folie nach Anspruch 1 oder 2, **dadurch gekennzeichnet, dass** die Deckschicht (4) aus einem Polyester (PET, PBT) einem orientierten Polyamid (OPA), einem orientierten Polypropylen (OPP) oder biorientierten Polypropylen (BOPP) besteht.

4. Folie nach einem der Ansprüche 1 bis 3, **dadurch gekennzeichnet, dass** die Siegelschicht (3) aus einem Polyethylen (PE) besteht.

5. Folie nach einem der Ansprüche 1 bis 4, **dadurch gekennzeichnet, dass** zwischen der Deckschicht (4) und der Siegelschicht (3) eine polymere Zwischenschicht (5) angeordnet ist, die auf ihrer der Siegelschicht (3) zugewandten Seite metallisiert ist.

6. Folie nach Anspruch 5, **dadurch gekennzeichnet, dass** die Zwischenschicht (5) aus einem metallisierten Polyester besteht.

7. Folie nach Anspruch 5 oder 6, **dadurch gekennzeichnet, dass** die Laserkerbe (7) innerhalb der Zwischenschicht (5) an oder vor der metallisierten Fläche (6) der Zwischenschicht (5) endet.

8. Folie nach einem der Ansprüche 1 bis 7, **dadurch gekennzeichnet, dass** die Deckschicht (4) eine Anordnung aus mindestens zwei nebeneinander angeordneten Laserkerben (7, 7') aufweist, wobei die Perforationslinie (10) sich deckungsgleich entlang einer ersten Laserkerbe (7) dieser Anordnung erstreckt und wobei die Siegelschicht (3) unterhalb einer zweiten Laserkerbe (7') dieser Anordnung mechanisch unversehrt ist.

9. Folie nach Anspruch 8, **dadurch gekennzeichnet, dass** der Abstand zwischen den nebeneinander angeordneten Laserkerben (7, 7') der Anordnung weniger als 2 mm beträgt.

10. Verfahren zur Herstellung einer Folie nach einem der Ansprüche 1 bis 9,
wobei durch Coextrusion oder durch Verkleben von zumindest zwei Folien eine mehrschichtige Folie (2) hergestellt wird, die auf einer Seite eine Deckschicht (4) aus einem mittels Laserstrahlen schneidbaren Polymer und auf der anderen Seite eine Siegelschicht (3) aus einem heißsiegelbaren Polymer aufweist,
wobei mittels Laserstrahlen mindestens eine linienförmigen Laserkerbe (7) in die Deckschicht (4) eingebracht wird und
wobei in die Siegelschicht (3) anschließend eine Perforation eingebracht wird, die eine aus Stegen (8) und Schnitten (9) bestehende und sich deckungsgleich entlang der Laserkerbe (7) erstreckte Perforationslinie (10) bildet.

11. Verfahren nach Anspruch 10, **dadurch gekennzeichnet, dass** die Perforation durch Schneiden oder Stanzen erzeugt wird.

12. Verfahren nach Anspruch 10 oder 11, **dadurch gekennzeichnet, dass** die Perforation in die Außenfläche der Siegelschicht (3) eingebracht wird.

13. Verfahren nach einem der Ansprüche 10 bis 12, **dadurch gekennzeichnet, dass** eine mehrschichtige Folie (2) hergestellt wird, die zwischen der Deckschicht (4) und der Siegelschicht (3) eine polymere Zwischenschicht (5) mit einer der Siegelschicht (3) zugewandeten metallisierten Fläche (6) aufweist, und dass in der Deckschicht (4) mittels Laserstrahlen eine Laserkerbe (7) erzeugt wird, die sich bis in die Zwischenschicht (5) erstreckt und an oder vor der metallisierten Fläche (6) der Zwischenschicht (5) endet.

14. Verfahren nach Anspruch 13, **dadurch gekennzeichnet, dass** die Perforation durch Schnitte (9) erzeugt wird, die in die Außenfläche der Siegelschicht (3) eingebracht werden und sich bis zu der metallisierten Fläche (6) der Zwischenschicht (5) erstrecken.

## Claims

1. A multi-layer film for tear-open packages, wherein the film (2) comprises a sealing layer (3) consisting of a hot-sealable polymer on the inside of the packaging and a covering layer (4) forming the outside of the packaging and consisting of a polymer cuttable by means of laser beams, and provided with at least one line-shaped laser notch (7) which at least partially separates the covering layer (4), **characterised in that** a perforation line formed of webs (8) and cuts(9) is arranged so as to be congruent along the laser notch (7), wherein the cuts (9) of the perforation line (10) at least partially penetrate the sealing layer (3).

2. The film according to claim 1, **characterised in that** the cuts (9) of the perforation line (10) extend from the outer surface of the sealing layer (3) towards the inside and end at or before the bottom of the laser notch (7).

3. The film according to claim 1 or 2, **characterised in that** the covering layer (4) consists of a polyester (PET, PBT), an oriented polyamide (OPA), an oriented polypropylene (OPP) or a bioriented polypropylene (BOPP).

4. The film according to one of claims 1 to 3, **characterised in that** the sealing layer (3) consists of a polyethylene (PE).

5. The film according to one of claims 1 to 4, **characterised in that** an intermediate polymer layer (5) is arranged between the covering layer (4) and the sealing layer (3), which intermediate layer (5) is metallised on the side facing the sealing layer (3).

6. The film according to claim 5, **characterised in that** the intermediate layer (5) consists of a metallised polyester.

7. The film according to claim 5 or 6, **characterised in that** the laser notch (7) ends inside the intermediate layer (5) at or before the metallised surface (6) of the intermediate layer (5).

8. The film according to one of claims 1 to 7, **characterised in that** the covering layer (4) comprises an arrangement of at least two adjacently arranged laser notches (7, 7'), wherein the perforation line (10) extends congruently along a first laser notch (7) of this arrangement, and wherein the sealing layer (3) below a second laser notch (7') of this arrangement is mechanically undamaged.

9. The film according to claim 8, **characterised in that** the distance between the two adjacently arranged laser notches (7, 7') of the arrangement is less than 2 mm.

10. A method for manufacturing a film according to one of claims 1 to 9,
wherein co-extrusion or bonding of at least two films is used to manufacture a multi-layer film (2), which on one side comprises a covering layer (4) consisting of a polymer cuttable by means of laser beams and on the other side comprises a sealing layer (3) consisting of a hot-sealable polymer,
wherein a perforation is subsequently introduced into the sealing layer (3), which forms a perforation line (10) consisting of webs (8) and cuts (9) and extending congruent along the laser notch (7).

11. The method according to claim 10, **characterised in that** the perforation is produced by cutting or punching.

12. The method according to claim 10 or 11, **characterised in that** the perforation is introduced into the outer surface of the sealing layer (3).

13. The method according to one of claims 10 to 12, **characterised in that** a multi-layer film (2) is manufactured, which between the covering layer (4) and the sealing layer (3) comprises an intermediate polymer layer (5) with a metallised surface (6) facing the sealing layer (3), and **in that** a laser notch (7) is produced in the covering layer (4) by means of laser beams, which notch extends as far as into the intermediate layer (5) and end at or before the metallised surface (6) of the intermediate layer (5).

14. The method according to claim 13, **characterised in that** the perforation is produced through cuts (9) which are introduced into the outer surface of the sealing layer (3) and which extend as far as the metallised surface (6) of the intermediate layer (5).

## Revendications

1. Film multicouches pour des emballages déchirables, le film (2) comportant une couche de scellement (3) en un polymère thermoscellable sur la face intérieure de l'emballage et une couche de couverture (4) formant la face extérieure de l'emballage en un polymère pouvant être coupé par faisceaux laser et étant muni d'au moins une rainure au laser (7) linéaire qui sectionne au moins en partie la couche de couverture (4), **caractérisé en ce qu'**une ligne de perforation (10) formée de barrettes (8) et d'entailles (9) est placée en coïncidence le long de la rainure au laser (7), les entailles (9) de la ligne de perforation (10) traversant au moins partiellement la couche de scellement (3).

2. Film selon la revendication 1, **caractérisé en ce que** les entailles (9) de la ligne de perforation (10) s'étendent à partir de la surface extérieure de la couche de scellement (3) vers l'intérieur et se terminent auprès ou avant le fond de la rainure au laser (7).

3. Film selon la revendication 1 ou la revendication 2, **caractérisé en ce que** la couche de couverture (4) est constituée d'un polyester (PET, PBT), d'un polyamide orienté (OPA), d'un polypropylène orienté (OPP) ou d'un polypropylène bi-orienté (BOPP).

4. Film selon l'une quelconque des revendications 1 à 3, **caractérisé en ce que** la couche de scellement (3) est constituée d'un polyéthylène (PE).

5. Film selon l'une quelconque des revendications 1 à 4, **caractérisé en ce qu'**entre la couche de couverture (4) et la couche de scellement (3) est placée une couche polymère intermédiaire (5) qui sur sa face dirigée vers la couche de scellement (3) est métallisée.

6. Film selon la revendication 5, **caractérisé en ce que** la couche intermédiaire (5) est constituée d'un polymère métallisé.

7. Film selon la revendication 5 ou la revendication 6, **caractérisé en ce que** la rainure au laser (7) se termine à l'intérieur de la couche intermédiaire (5), sur ou avant la surface métallisée (6) de la couche intermédiaire (5).

8. Film selon l'une quelconque des revendications 1 à 7, **caractérisé en ce que** la couche de couverture (4) comporte un agencement d'au moins deux rainures au laser (7, 7') disposées côte à côte, la ligne de perforation (10) s'étendant en coïncidence le long d'une première rainure au laser (7) dudit agencement et la couche de scellement (3) étant mécaniquement intacte en-dessous d'une deuxième rainure au laser (7') dudit agencement.

9. Film selon la revendication 8, **caractérisé en ce que** l'écart entre les rainures au laser (7, 7') disposées côte à côte de l'agencement est inférieur à 2 mm.

10. Procédé destiné à la fabrication d'un film selon l'une quelconque des revendications 1 à 9,
lors duquel, par co-extrusion ou par collage d'au moins deux films, on fabrique un film multicouches (2) qui sur une face, comporte une couche de couverture (4) en un polymère susceptible d'être coupé par faisceaux laser et sur l'autre face, comporte une couche de scellement (3) en un polymère thermoscellable,
lors duquel, au moyen de faisceaux laser, on ménage au moins une rainure au laser (7) linéaire dans la couche de couverture (4) et
lors duquel on ménage ensuite dans la couche de scellement (3) une perforation qui forme une ligne de perforation (10) constituée de barrettes (8) et d'entailles (9) et s'étendant en coïncidence le long de la rainure au laser (7).

11. Procédé selon la revendication 10, **caractérisé en ce qu'**on crée la perforation par découpe ou par estampage.

12. Procédé selon la revendication 10 ou la revendication 11, **caractérisé en ce qu'**on ménage la perforation dans la surface extérieure de la couche de scellement (3).

13. Procédé selon l'une quelconque des revendications 10 à 12, **caractérisé en ce qu'**on fabrique un film multicouches (2), qui entre la couche de couverture (4) et la couche de scellement (3) comporte une couche polymère intermédiaire (5) avec une surface métallisée (6) dirigée vers la couche de scellement (3) et **en ce que** dans la couche de couverture (4), on créé au moyen de faisceaux laser une rainure au laser (7) qui s'étend jusque dans la couche intermédiaire (5) et qui se termine sur ou avant la surface métallisée (6) de la couche intermédiaire (5).

14. Procédé selon la revendication 13, **caractérisé en ce qu'**on créé la perforation par des coupes (9) que l'on ménage dans la surface extérieure de la couche de scellement (3) et qui s'étendent jusqu'à la surface métallisée (6) de la couche intermédiaire (5).
